Europäisches Patentamt

European Patent Office

Office européen des brevets

(11) Publication number: **0 047 606**
**B1**

# EUROPEAN PATENT SPECIFICATION

(45) Date of publication of patent specification: **31.07.85**

(51) Int. Cl.⁴: **G 06 F 3/02, B 42 F 13/34**

(21) Application number: **81303862.7**

(22) Date of filing: **25.08.81**

(54) **Input device for data processing system.**

(30) Priority: **04.09.80 JP 122789/80**
**04.09.80 JP 122790/80**

(43) Date of publication of application:
**17.03.82 Bulletin 82/11**

(45) Publication of the grant of the patent:
**31.07.85 Bulletin 85/31**

(84) Designated Contracting States:
**DE FR GB**

(56) References cited:
**DE-A-3 017 469**
**GB-A-1 092 386**
**JP-A-54 133 832**

(73) Proprietor: **FUJITSU LIMITED**
**1015, Kamikodanaka Nakahara-ku**
**Kawasaki-shi Kanagawa 211 (JP)**

(72) Inventor: **Tanaka, Toshiaki**
**307-1, Oaza Koyama**
**Suzaka-shi Nagano, 382 (JP)**
Inventor: **Fukai, Masao**
**10-48, Aza Matsubara Oaza Kamegura**
**Suzaka-shi Nagano. 382 (JP)**
Inventor: **Onuma, Tatsuro**
**960, Takahashi-cho**
**Suzaka-shi Nagano. 382 (JP)**
Inventor: **Kinoshita, Ryohei**
**3-66, Minamihara**
**Suzaku-shi Nagano. 382 (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

## Description

This invention relates to an input device for use in inputting multiple items of information into an information processing system by keying operations, more particularly, the present invention relates to a roll type input device in which a plurality of page sheets bearing input information designations are provided in the form of a roll and a desired page sheet is selected by rotating the roll of page sheets.

An input device of this type, an item input device, usually employs a structure in which a page drum is formed by fixing respective first ends of each of a plurality of plastic page sheets directly to the circumferential surface of a rotating shaft, and this page drum is accommodated in a main device body in such a way as to be withdrawable from the device body, and insertable into the device body, to provide for exchange of page drums.

When an operator operates a desired page selection key of a keyboard of the device, the rotating shaft automatically rotates through a specified angle, in a direction opposite to those in which page sheets are rolled or wound on the shaft, thereby to bring about a setting condition in which a second end of a desired page sheet (opposite to the first end of that sheet) is placed at a page sheet guide exit of the device. Thereafter, the rotating shaft automatically rotates in a direction the same as that in which the page sheets are rolled or wound on the shaft, to guide the desired page sheet to a position below input keys of the keyboard of the device. Thus, the input keys of the keyboard are provided with functional displays (each key is provided with a designation of its function) in accordance with designation information carried by the desired page sheet. When an operator operates desired input keys by referring to the functional display given by the desired page sheet in these conditions, a key signal generated by the input key, and a page sheet identification signal, which depends on the page selection key previously actuated by the operator, and a page drum identification signal, which identifies with the particular kind of page drum inserted into the device, are input into the data processing system as input information.

In an existing system, a plurality of page drums bearing different input information designations are prepared in advance in order that many different kinds of information can be input using the system.

A page drum is built into the main body of the item input device as explained above, in such a way as to be exchangeable for another page drum. However, in existing systems, page drum replacement has been very troublesome because such replacement has been effected manually by opening the keyboard and a cover of the main body of the item input device. Furthermore, existing page drums have a cartridge type structure in which four rotating shafts are provided around which extends an endless belt for holding the page sheets in the winding direction, with an accommodation cabinet therefore, in addition to the rotating shafts and page sheets. This makes replacement troublesome because of the heavy weight and large size of the replaceable units. In addition, storage of cartridges required wider space.

An existing item input device employs, moreover, a structure in which page selection is carried out by rotating the rotating shaft on which page sheets are wound in the direction in which the page sheets are wound, and in the reverse direction, in such a way that this can result in slackness in the page sheets, other than the page sheet selected at the time of page selection. As a result, when page selection operations are repeated several times, the end locations of page sheets during winding can become irregular and mis-selection may occur and such mis-selection can become a significant problem as page selection operation speed increases.

JP—A—54 133 832 discloses an input device having a page drum in which first ends of each of a plurality of flexible page sheets are directly connected to the circumferential surface of a rotatable shaft of the device, with those ends spaced apart around the circumference of the shaft. Exchange of the page drum thus involves exchange of the rotatable shaft.

GB—A—1 092 386 discloses an input device having an operational disposition in which a plurality of flexible page sheets, bound together in a page sheet unit separate from a rotatable shaft of the device, are wound around the circumference of the rotatable shaft in such a manner that the sheets overlap one another around the circumference with their radially outermost ends spaced apart around the circumference, the device being operable to select a desired page sheet by rotation of the rotatable shaft in in the direction of winding of the page sheets in the said operational disposition, and to deploy a selected page sheet, to a display location, by rotation of the shaft in the opposite direction.

According to the present invention there is provided, an input device, for a data processing system, having an operational disposition in which a plurality of flexible page sheets, bearing input information designations, bound together in a page sheet unit separate from a rotatable shaft of the device, are wound around the circumference of the rotatable shaft in such a manner that the sheets overlap one another around the circumference with their radially outermost ends spaced apart around the circumference, the device being operable to select a desired page sheet by rotation of the rotatable shaft in the direcion of winding of the page sheets in the said operational disposition, and to deploy a selected page sheet, to a display location, by rotation of the shaft in the opposite direction,
characterised in that
the ends of the page sheets of the page sheet unit which are radially innermost in the said operational disposition are fixed to a surface of a flexible base sheet of the page sheet unit and are bound in the page sheet unit so as to be spaced apart around the said circumference, in the said operational disposition, the flexible base sheet having at one end a linkage pin opposite ends of which project from opposite sides of the base sheet and the rotatable shaft having groove means into which the said opposite ends of the linkage pin are linked and coupled when the page sheet unit 141 is taken up onto the rotatable shaft,

in that

the device has a page sheet unit exchange mouth, opening to the exterior of the device, and a guide path extending from the exchange mouth to the rotatable shaft, the page sheet unit being inserted through the exchange mouth into the guide path, so as to link the said opposite ends of the linkage pin into the groove means of the rotatable shaft when it is to be taken up onto the rotatable shaft, and the page sheet unit being fed out of the device through the exchange mouth via the guide path when it is to be released after having been previously taken-up onto the rotatable shaft,

and in that

the device is operable to take up the page sheet unit onto the rotatable shaft, to achieve the said operational disposition, by rotation of the rotatable shaft in the said direction of winding, and operable to release the taken-up page sheet unit by rotation of the rotatable shaft in the said opposition direction, the device having an endless belt which passes around the rotatable shaft for maintaining the wound condition of the page sheets of the page sheet unit when taken up onto the rotatable shaft.

An embodiment of the present invention can provide an item input device in which the disadvantages of previous proposals are, in substance, overcome, and in which page exchange can be effected simply.

An embodiment of the present invention can provide an item input device which can ensure stable and reliable page selection operation, and in which mis-selection does not occur even for high speed operation.

Moreover, an embodiment of the present invention can provide an item input device wherein page sheets are wound by the rotating shaft, during page winding, through rotation of the rotating shaft in the winding direction, whilst, during page selection, a rotating force is transmitted to the rotating shaft through the wound page sheets such that the rotating shaft rotates in a reverse direction.

Reference is made, by way of example, to the accompanying drawings, in which:—

Figure 1 is a schematic perspective view of the exterior of an input device embodying the present invention,

Figure 2 is a side sectional view of the device of Figure 1,

Figure 3 is a schematic perspective view illustrating a page sheet unit for use in an embodiment of the present invention,

Figure 4 is a schematic sectional view of a page sheet unit for use in an embodiment of the present invention, in an unwound condition,

Figure 5 is a schematic sectional view of a page sheet unit for use in an embodiment of the present invention, in a wound condition,

Figure 6 is a schematic plan view, to an enlarged scale, of part of a base sheet of a page sheet unit for use in an embodiment of the present invention,

Figure 7 is a schematic illustration of the base sheet shown in Figure 6, when wound on a rotating shaft,

Figure 8 is a schematic circuit diagram of an identification signal generator circuit employed in an embodiment of the present invention,

Figure 9 is a waveform diagram, illustrating waveforms of signals arising when the circuit of Figure 8 is in use,

Figure 10 is a perspective view of the page selection mechanism of an embodiment of the present invention,

Figure 11 is a schematic perspective view illustrating the assembly of a support frame of the page selection mechanism of Figure 10,

Figure 12 is a schematic perspective view illustrating the assembly of a rotating shaft of the page selection mechanism of Figure 10,

Figure 13 is a schematic perspective view of the shaft of Figure 12 when assembled,

Figure 14 is a sectional view of a roller carried by the rotating shaft of Figure 13,

Figures 15 to 19 are schematic sectional views for assistance in explanation of page selection operation of the page selection mechanism of Figure 10,

Figure 20 is a graph,

Figure 21 is a schematic block circuit diagram of a drive control circuit of an embodiment of the present invention, and

Figure 22 is a waveform diagram for assistance in explanation of operation of the circuit of Figure 21.

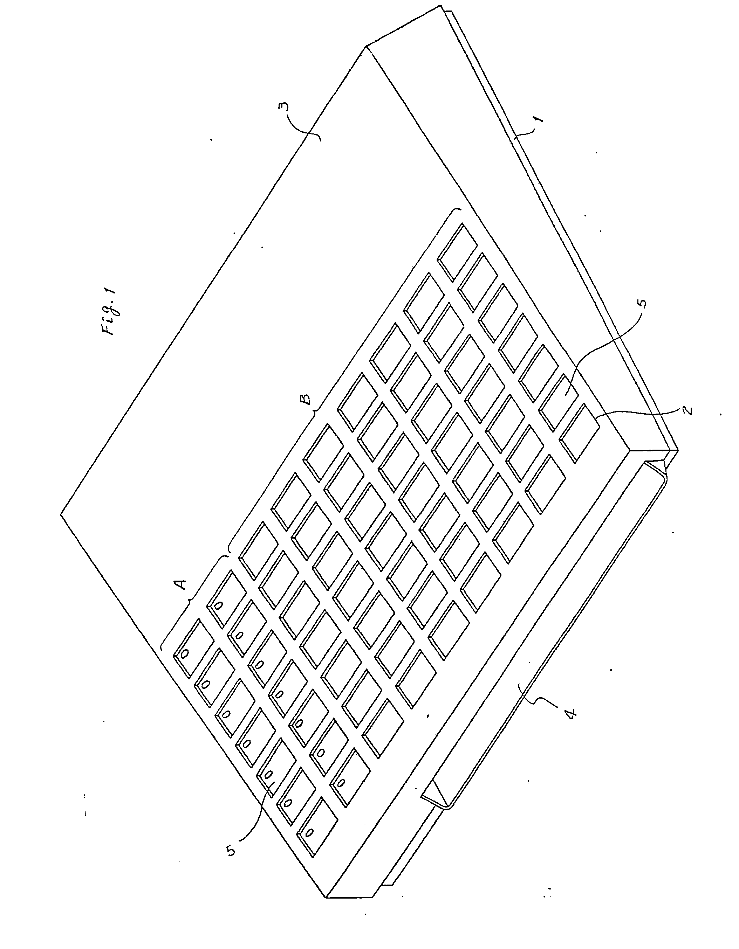

Figure 1 is a schematic perspective view of the exterior of an item input device embodying the present invention. The main body of the device comprises a keyboard (explained in more detail below) and a cabinet having a metal base 1, mounting a page change-over mechanism, covered over by a metal cover 3, which is provided with a plurality of rectangular through-holes 2 arranged in the form of a lattice. At the front of the device, a page sheet unit exchange mouth 4, which is coupled to the interior of the cabinet, is provided. Moreover, below the rectangular through-holes 2, respective thin type push button switches 5, for which switching is realised by vertical movement of keytops operable through the through-holes 2, are provided. The push button switches are divided into two groups:— a page selection key group A (fourteen keys) for selecting desired page sheets, and an input key group B (forty nine keys in Figure 1) for use for the input of information.

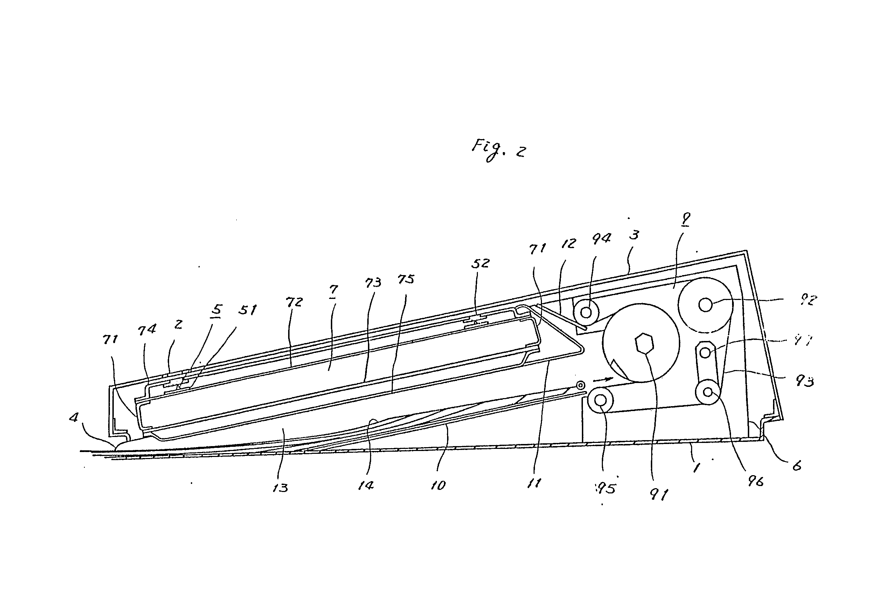

Figure 2 is a sectional view illustrating the interior of the device shown in Figure 1. As shown in Figure 2, a pair of side walls 6, arranged face-to-face with one another, are provided on the upper surface (as seen in Figure 2) of base plate 1 (in Figure 2, only one side wall 6 is indicated), a keyboard 7 mounting push button switches 5 is provided between the side walls 6, and a page selection mechanism 9 is provided to the rear (to the right in Figure 2) of the keyboard 7.

The keyboard 7 is provided with a PC board 72 on which are mounted switching parts 51 of the push button switches 5, and a PC board 73 on which are mounted circuit elements such as a keyboard encoder etc. The PC boards 72 and 73 are spaced by U-shaped metal pieces 71 provided at opposite ends of the PC boards. Above the PC board 72, a switch guide plate 74, for guiding keytops 52 of the switches 51, is provided, whilst below PC board 73 a page sheet guide plate 75 is provided for guiding a page sheet unit 14, as explained in more detail below.

In addition, between the switch guide plate 74 of the keyboard 7 and the cover 3, there is provided a space into which a selected page sheet is guided.

The page selection mechanism 9 has a rotating shaft 91 for winding a page sheet unit 14, a drive shaft 92 connected to a stepping motor (not illustrated in Figure 2) for rotating the rotating shaft 91, an endless belt 93 which functions as a clamping member for holding a page sheet unit 14 in a winding direction of the rotating shaft 91, and shafts 94, 95 and 96 for bridging the belt 93 between and around the shafts 91 and 92. The shaft 96 is freely rotatable with respect to a shaft 97, in order to maintain constant tension in the belt 93.

An inclined guide plate 10 is provided, in parallel to the guide plate 75, on the base plate 1 below the keyboard 7, whilst guide plates 11 and 12, forming a guide path for a selected page sheet, are provided in a space extending from the rotating shaft 91 to the guide plate 74. The space between the guide plates 10 and 75 forms a page sheet unit guide path 13, with a forward end (to the left in Figure 2) which opens onto the exchange mouth 4, while a rearward end thereof opens onto the rotating shaft 91.

Figure 2 illustrates the condition of the device when a page sheet unit 14 is being guided along the path 13 from the exchange mouth 4.

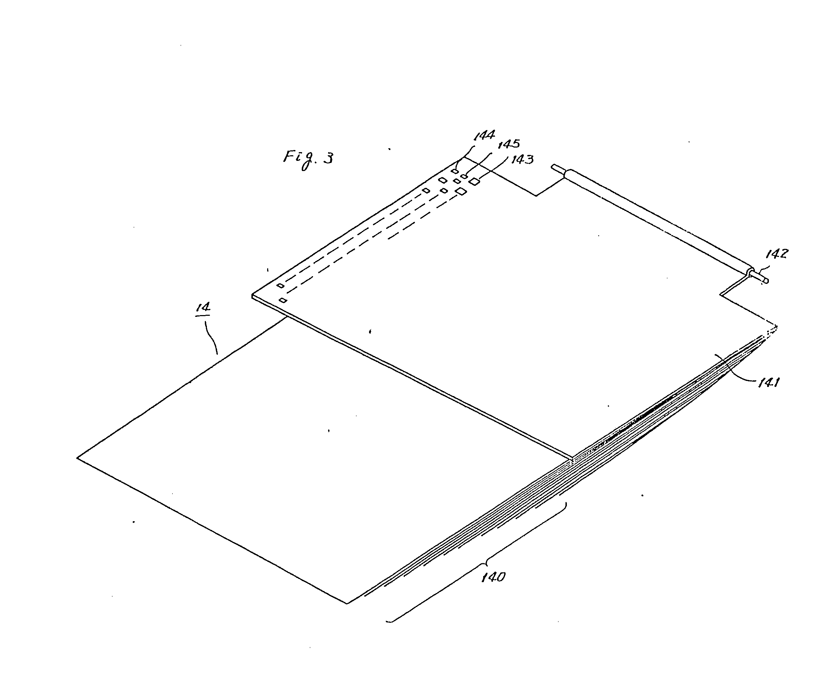

Figure 3 is a perspective view illustrating one example of a page sheet unit 14 as employed in an embodiment of the present invention.

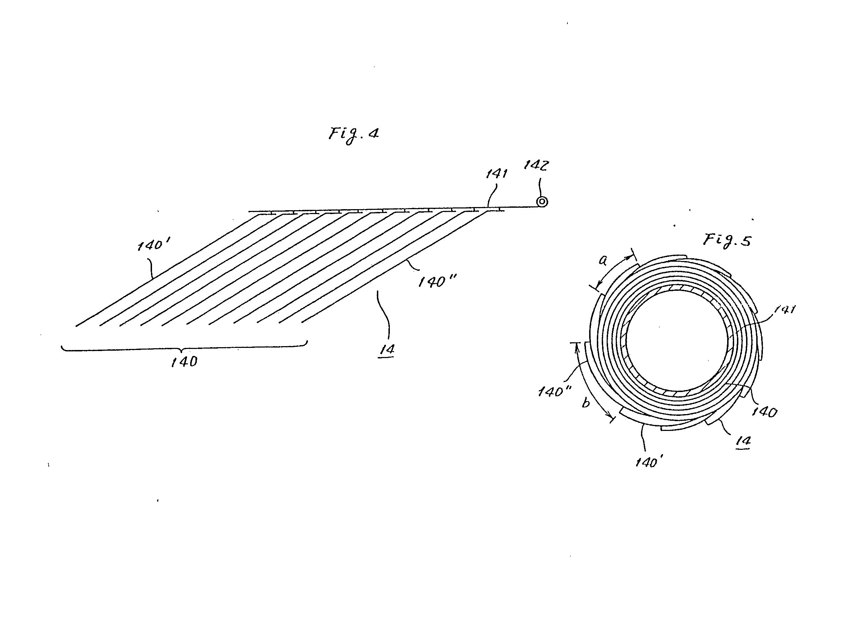

The page sheet 14 comprises a plurality of page sheets 140, each of the same shape, consisting of a flexible material such as polyester film, and a base sheet 141 consisting of a non-transparent flexible material. Each page sheet 140 carries information designations (symbols, signs, characters etc — not illustrated) provided thereon by printing for example, which information gives an indication of the functions of pushbutton switches 5 of the input key group B of the keyboard 7 when that page sheet is selected and in place so that the designations thereon are associated with push button switches 5 in through holes 2. Respective page sheets 140 carry designations of different kinds of input data, so that the switches can be shown each to correspond to a plurality of items of data, depending upon which page sheet 140 is selected and in place. The base sheet 141 is a little thicker than the page sheets 140 and a take-up end thereof is provided with a linkage pin 142 of metal. At a "signal" side of the page sheets, page sheet unit identification holes 143 and page sheet identification holes 144 and 145, which are seen arrayed in lines in Figure 3, and through which light can pass, are provided, and thereby page identification means is formed on the page sheet unit 14. One end of each page sheet 140 is fixed to the base sheet 141 with a constant spacing between those ends, as shown in Figure 4.

Figure 5 illustrates a page sheet unit 14 when the base sheet 141 is wound up in the fashion of a drum. The ends of the page sheets 140 opposite to the ends fixed to the base sheet, are exposed around the periphery of the drum as shown in Figure 5. A predetermined length of each page sheet 140 is exposed. In this case the length of page sheet exposed is $a$ for each page sheet except a final page sheet 140". The final or last page sheet 140", part of which is covered by a starting or first page sheet 140', when the page sheet unit is wound as shown in Figure 5, has an exposed length $b$. $b$ is larger than $a$ and desirably the winding diameter of base sheet 140 is so determined that $b = 2a$.

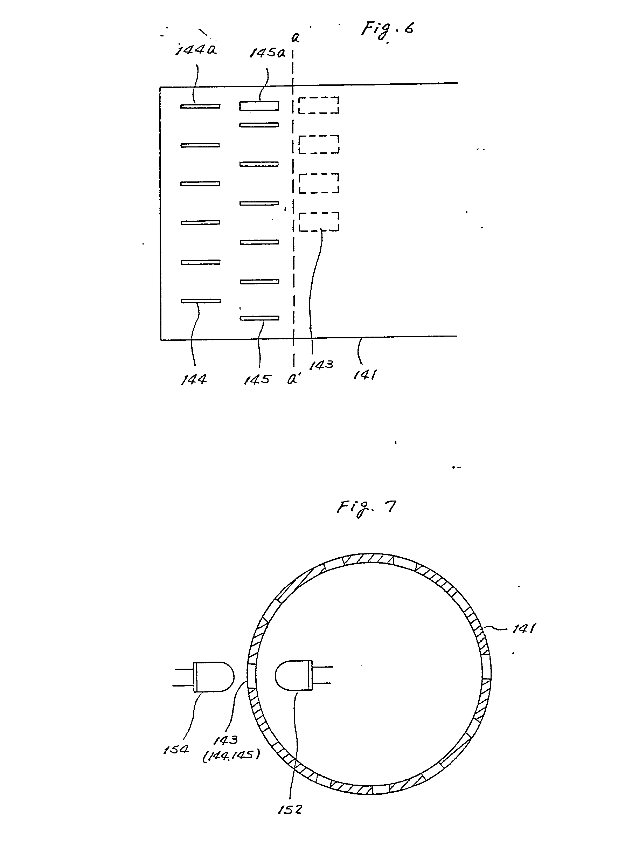

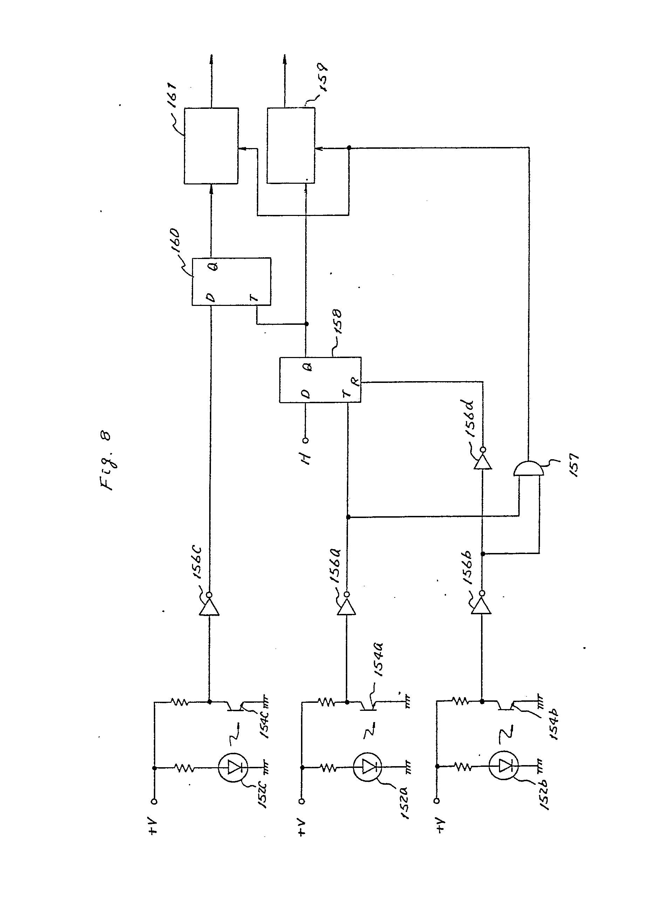

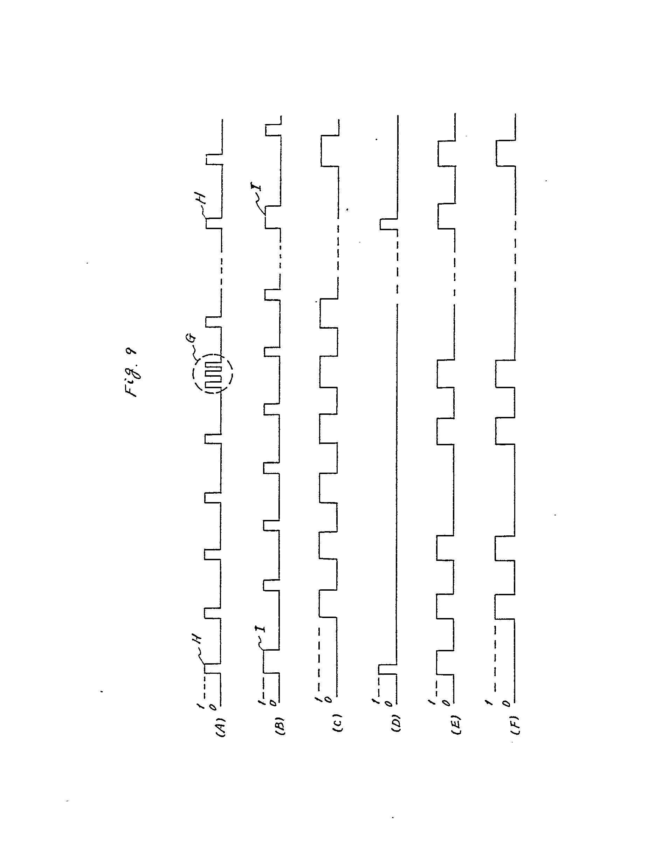

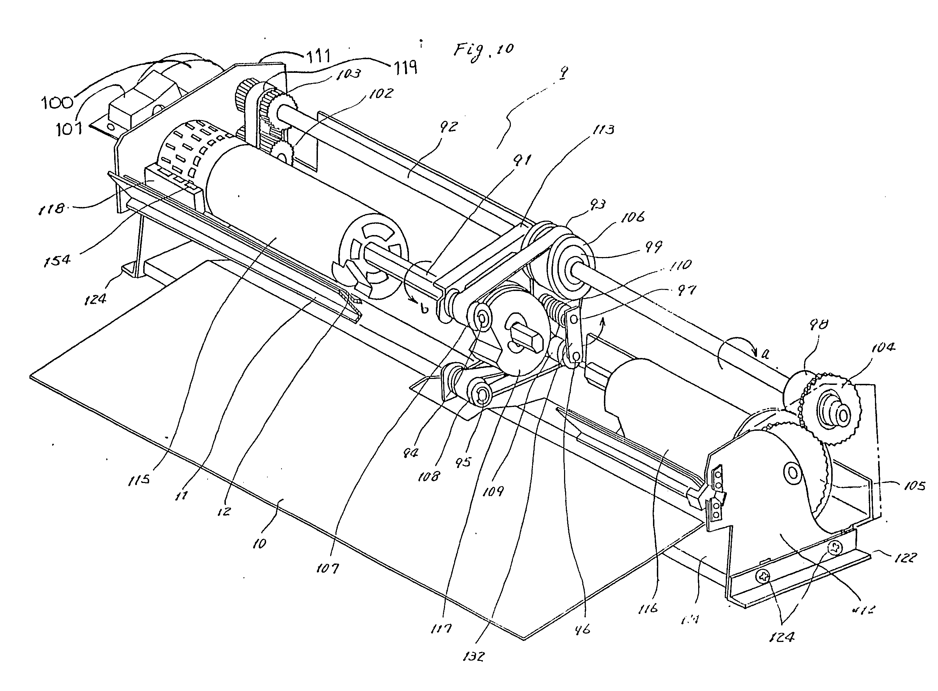

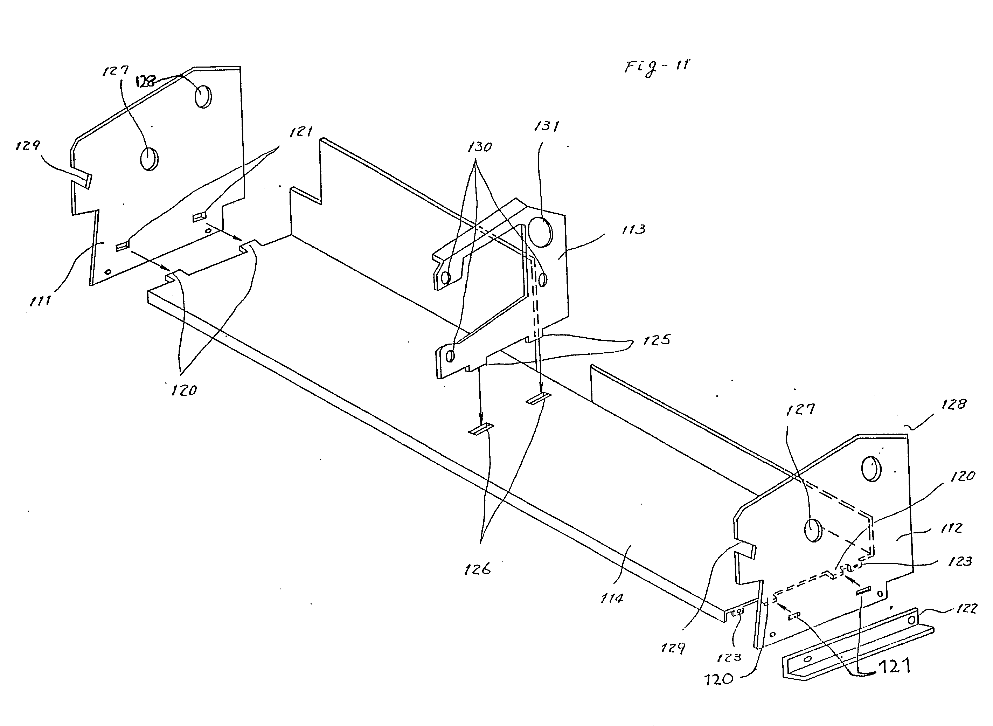

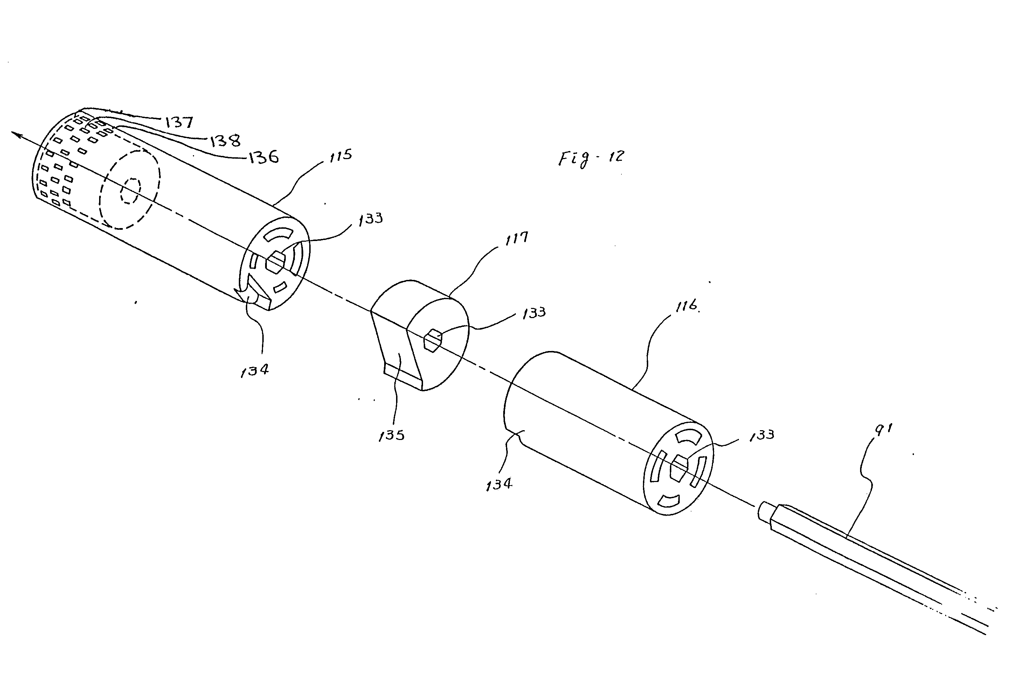

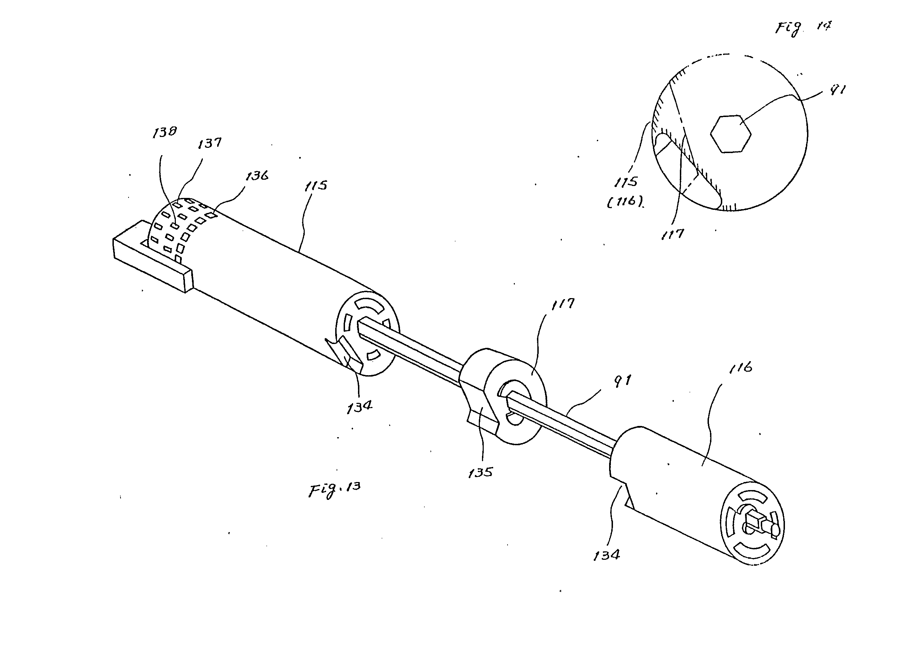

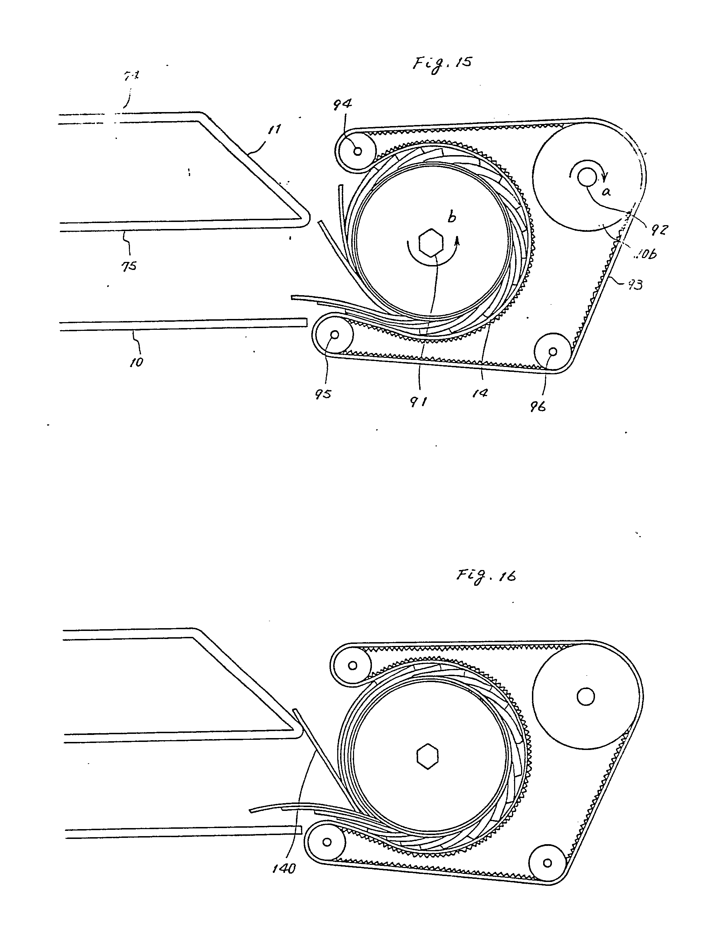

Figure 6 is a plan view, to an enlarged scale, of the page sheet identification means provided at one side of the base sheet 141 of Figure 3.

As shown in Figure 6, a first column of holes 144, for page sheet identification, comprises a number of holes equal to the number of page sheets 140 of the page sheet unit 14, aligned along the direction in which page sheets 140 are spaced along the base sheet 141. In addition, a second column of holes 145 for page sheet identification is formed with the holes at centres each between a pair of holes of the firsrt column 144. The holes of the second column are of the same shape and the same slit width as those of the first column except for the first hole 145a of the second column 145, located at a starting end of base sheet 141, which is formed at a position along the same line as a first hole 144a of the first column 144, but with a wider slit width. Moreover, a specified number of page sheet unit identification holes 143 are provided, each hole 143 at a position aligned with one of the holes of the first column 144 but with a slit width wider than that of the first hole 145a of the second column 145.

The slit width dimensions of respective holes are related as follows:— Page sheet unit identification holes 143 > first hole 145a of the second column 145 > holes of the first column 144 = holes other than the first hole 145a of the second column 145.

To provide a page sheet unit 14, a plurality of page sheets 140 bearing different data items are prepared in advance and the number of page sheet identification holes 143 and locations thereof are different for each page sheet unit.

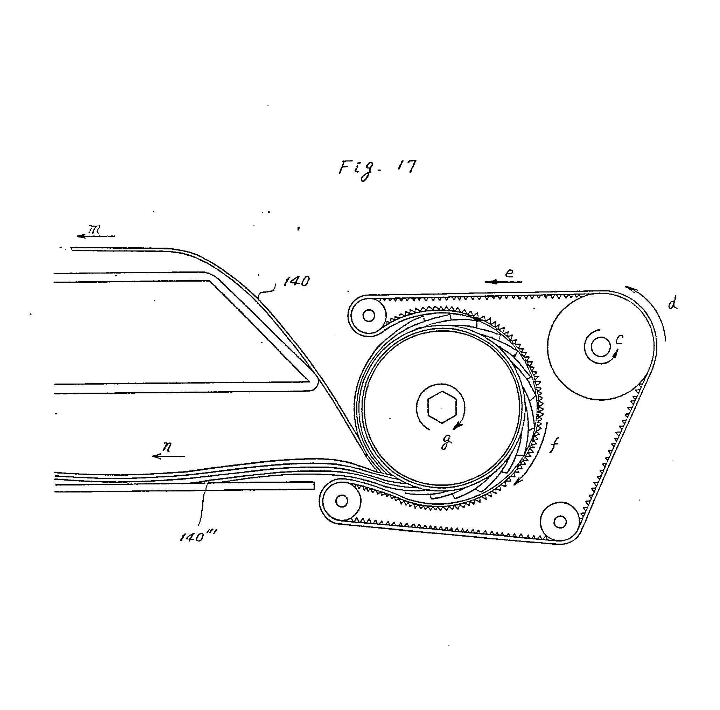

Figure 7 schematically illustrates conditions when the base sheet 141 is wound on the rotating shaft 91. Under these conditions, a light emitting element 152, consisting of a light emitting diode (LED), and a light sensing element 154, consisting of a phototransistor, are arranged face-to-face on opposite sides of the face sheet 141, and thereby identification holes 143, 144, 145 in the base sheet can be detected.

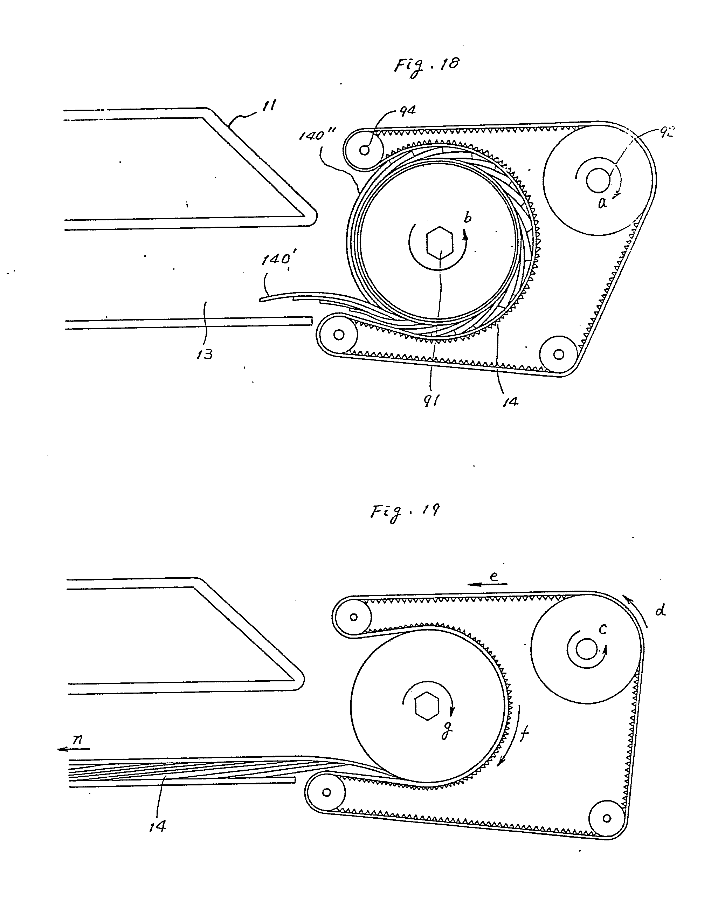

Selected page sheet identification and page sheet unit identification means will be explained in connection with the illustrated embodiment of this invention, by reference to an identification signal generator circuit as shown in Figure 8, an operating signal waveforms as shown in Figure 9.

In Figures 8, 152a and 154a are, respectively, a light emitting element and a light sensing element for detecting the holes of the first column 144 for page sheet identification, 152b and 154b are, respectively, a light emitting element and a light sensing element for detecting the holes of the second column 145 for page sheet identification, and 152c and 154c are, respectively, a light emitting element and a light sensing element for detecting the holes of the page sheet identification column 143 for page sheet unit identification.

156a, 156b, 156c and 156d, are invertor circuits, 157 is a AND circuit, 158 is a D-type flip-flop circuit, of which a terminal D is held at a constant voltage H, for holding a page pulse generated in response to detection of a first column hole 144, 159 is a counter-circuit for counting output pulses of flip-flop 158, which is clocked by clock pulses of a constant period, 160 is a D-type flip-flop circuit for holding a page unit pulse generated in response to detection of a page unit identification column hole 143, and 161 is a counter circuit which counts output signals of flip-flop 160, which is clocked by clock pulses of a constant period.

In Figure 9, pulse waveform A indicates an output waveform of invertor 156a, B indicates an output waveform of invertor 156b, C indicates an output waveform of flip-flop circuit 158, D indicates an output waveform of AND circuit 157, E indicates an output waveform of invertor 156c, and F indicates an output waveform of flip-flop circuit 160.

In the page identification circuit of Figure 8, the light sensing elements 154a, 154b, 154c operate when light emitted from a light emitting element 152a, 152b, 152c passes through a hole (a first column hole 144, a second column hole 145, and an identification hole 143, respectively) and transmit a slit pulse of width corresponding to the slit width of the detected hole to inverters 156a, 156b, 156c respectively. When page pulses as shown in waveform A (which are generated upon detection of holes of column 144 which correspond to page sheets 140) are sequentially input to input terminal T of flip-flop 158 the output terminal Q of the flip-flop 158 is set. Clear pulses (a pulse train inverted with respect to the pulse train of B by inverter 156d) which are sequentially input to a clear terminal R of flip-flop 158 from the inverter 156b clear the output Q after each pulse of waveform A, and thereby output pulses of flip-flop 158 as shown in waveform C are sequentially input to the counter circuit 159 and counted.

As explained above, the flip-flop 158 has a structure such that it is set by each page pulse of waveform A and then sequentially cleared by each clear pulse corresponding to an inverted pulse of waveform B. This ensures that extra or spurious pulses are not counted even when page pulses of high frequency are generated (as illustrated at G in waveform A) during page selection, as a result of unwanted external vibration, for example.

When the pulses of waveforms E and C are input synchronously to the input/output terminals D, T of flip-flop 160 (this occurs when an output of invertor 156c — which indicates detection of a page unit identification hole — and an output Q of flip-flop 158 coincide) the flip-flop 160 sends an output pulse as shown in waveform F to the counter circuit 161 from its output terminal Q, and this output pulse is counted.

Since the first hole 144a of the first column 144, and the first hole 145a of the second column 145 are aligned, as explained above, the light sensing elements 154a, 154b operate simultaneously to cause generation of pulses H and I as shown in waveforms A and B. These pulses cause a pulse as shown in waveform D to be input to the counters 159, 161 from the AND circuit 157. This is a reset pulse which resets the count values of counters 159, 161, at a constant period and initialises the counters.

Identification signals provided by this identification circuit are generated as follows. When the page sheet unit 14 is hooked to the rotating shaft 91 and wound for page selection, the counters 159, 161 are initialised by the first reset pulse shown in waveform D, due to the simultaneous provision of pulses H and I of waveforms A and B. The rotating shaft 91 is so controlled as to make several turns (two turns in one example of an embodiment of this invention) during the period over which a page sheet unit 14 is wound onto shaft 91 and a desired page sheet is set. During this take-up period, the counter 161 sequentially counts the output pulses (see waveform F) of the flip-flop 160, which are generated in dependence upon signals indicating the existence or nonexistence of page unit identification holes 143 (see waveform E) obtained in synchronisation with page pulses of waveform A (and hence of waveform C) and the counter 161 outputs a count value reached when a second reset pulse is applied, to an external data processing system, as a page sheet unit identification signal. This identification signal is output for each rotation of the page sheet unit 14.

The counter 159, which is initialised by the first reset pulse, sequentially counts output pulses (waveform C) of the flip-flop 158 until the second reset pulse is applied, and outputs the count value to the data processing system as data indicating that a take-up condition of the page sheet unit 14 has been achieved (a condition in which page sheet unit 14 has been completely taken onto the rotating shaft 91).

Thereafter, the counter 159, which is initialised again by the second reset pulse, sequentially counts the output pulses a flip-flop 158 until a third reset pulse is applied, and inputs this counted value to the data processing system as a selected page sheet identification signal. The counter 159 counts the output pulses of the flip-flop 158 until the rotating shaft 91 makes a turn in the reverse direction, which turn is for guiding the selected page sheet to a position above the keyboard 7, and this counted value is input to the data processing system as data indicating the achievement of a page sheet display condition. Thus, the counter 159 sends a page sheet unit take-up condition signal, a selected page sheet identification signal, and a selected page sheet display condition signal.

Thus, the data processing system can identify what kind of page sheet unit has been loaded, and which page sheet has been selected, from the selected page sheet identification signal and the page sheet unit identification signal obtained from counter 161, and thereby a code signal generated by depression of a push button switch 5 can be defined so as to correspond correctly to the designation of the function of the push button switch 5 given by the selected page sheet.

The page selection mechanism of an embodiment of the present invention will be explained with reference to Figures 10 to 14.

Figure 10 is a perspective view of the page selection mechanism 9 of an embodiment of the present invention. As explained above, 91 is a rotating shaft, 92 is a drive shaft, 93 is an endless belt, 94 to 97 are shafts, and 10, 11 and 12 are guide plates. 98 and 99 are one-way clutches, which each rotate in synchronisation or in mesh with shaft 92 for only one direction of rotation of the drive shaft 92 but which rotate freely (free wheel) for the other direction of rotation of the shaft 92. Clutch 98 is provided at an intermediate position along shaft 92 and clutch 99 is provided at one end of the drive shaft 92. 100 is a stepping motor, comprising a pulse motor, 101 is a seesaw switch from turning the motor ON and OFF. 102, 103, 104 and 105 are gears, 106, 107, 108 and 109 are pulleys, 110 is a recovery coil spring, 111, 112 and 113 are metal holding plates, 114 is a metal bottom plate, 115, 116 and 117 are rollers, 118 is a support plate, mounted on the holding plate 111, which supports three light sensing elements 154 in opposition to column holes in page unit 14, and 119 is a timing belt.

As shown in Figure 11, a support frame which supports the rototating shaft 91, etc. is formed by vertically fixing holding plates 111 and 112 on opposite ends of bottom plate 114, and fixing holding plate 113 at the centre of bottom plate 114. For fixing the holding plates, projections 120 formed at opposite ends of the bottom plate 114 are engaged with holes 121 in the holding plates 111 and 112. Thereafter, tongue elements 123 are screwed to the holding plates 111 and 112 (see Figure 10) using screws 124, via a clamp plate 122. In the case of holding plate 113, projections 125 thereon are engaged in holes 126 in bottom plate 114 and thereafter the ends of those projections are twisted. The holding plates 111 and 112 have through holes 127 and 128 therein, for freely rotatably supporting opposite ends of rotating shaft 91 and drive shaft 92, and slits 129 for mounting the guide plate 12. In addition, the holding plate 113 is provided with holes 130 for carrying shafts 94, 95 and 97, and with a hole 131 through which the drive shaft 92 is passed.

When they are mounted, respective ends of shafts 94, 95 and 96 are inserted into the holes 130 of the holding plate 113 and are fixed by a caulking method. After insertion of pulleys 107, 108 and 109 onto shafts 94, 95 and 96, the other ends of the shafts are protected, to prevent the pulleys coming off the shafts, by E rings, for example.

As shown in Figure 10, the other end (opposite to the end near holding plate 113) of shaft 97 is provided with an inter-connecting plate 132 which can freely rotate on shaft 97. The inter-connecting plate 132 is also connected to fixed shaft 96 on which the pulley 109 is mounted so as to be freely rotatable, and the inter-connecting plate 132 is always urged as indicated by an arrow mark in Figure 10 by means of recovery coil spring 110, so as to apply a constant tension to the belt 93.

After the pulleys 107 to 110 have been mounted, the holding plate 113 is mounted on the bottom plate 114 as explained previously.

A structural characteristic of the support frame thus formed is that positioning is effected by abutment of edge surfaces and broad surfaces of holding plates 111, 112, 113 and the bottom plate 114. This structure can be assembled very accurately because non-bending parts are used, and highly efficient engagement between projections and holes can be provided.

As shown in Figure 10, the drive shaft 92 has a gear 103 mounted at one end thereof, a one-way clutch providing a pulley externally mounted at an intermediate position therealong, and one-way clutch 98 and gear 104 externally mounted at its other end.

As shown in Figures 10, 12 and 14, the rotating shaft 91 consists of a metal rod having a hexagonal section, carrying rollers 115 and 116 at its opposite ends, and carrying roller 117 at its centre. The rollers 115, 116 and 117, as shown in Figure 12, each have a central through-hole 133 of a hexagonal section, for accommodating shaft 91. The rollers 115 and 116 are respectively provided with crescent-shaped grooves 134 with which opposite ends of the pin 142 of a page sheet unit 14 engage when the page sheet unit 14 is inserted into the device, and a cut-away part 135, for allowing the pin 142 to escape from engagement, is formed over a portion of the circumference of the roller 117. Moreover, the outer end (upper left end in Figures 12 and 13) of roller 115 is formed as a cylinder and page sheet unit identification hole 136 and page sheet identification holes 137, 138 are formed through the circumferential wall of the roller 115 in lines around that wall. The page sheet identification holes 137, 138 are formed so as to oppose the page sheet identification holes 144, 145 formed on the base sheet 141 of a page sheet unit 14 when the unit is wound on the roller 115. Each page sheet unit identification hole 136 is located at a position along the same horizontal line (line longitudinal of roller 115) as a page sheet identification hole 137 of the same number as the hole 136.

When the base sheet 141 of a page sheet unit 14 is taken up onto roller 115, the page sheet identification holes 137 and 138 of the roller match respectively with holes 144 and 145 of the base sheet. Page sheet unit identification holes 143 of the page sheet 141 match page sheet unit identification holes 136 of the roller 115 corresponding thereto, and unnecessary holes in roller 115, which do not match with holes 143, are covered, because the base sheet 141 is composed of a non-transparent material. Thereby, the desired page sheet unit identification signal can be obtained. The rollers 115, 116, 117 may be formed by a resin mould method, and loaded onto the rotating shaft 91 as shown in the perspective view and sectional view of Figures 13 and 14.

The page unit rotation shaft is thus formed.

When this shaft is employed, the page sheet identification holes 137, 138 and 144, 145 match as explained above and therefore it is possible, as an alternative to the use of a page sheet unit as shown in Figure 6, to use a page sheet unit of a form such that the base sheet 141 shown in Figure 6 is cut along the line a—a' shown in Figure 6, so that page sheet identification holes 144, 145 are removed from the base sheet. Such a page sheet unit is rather effective from the point of view of strength of base sheet 141 because a more highly reliable identification signal can be obtained.

The page selection mechanism of an embodiment of the present invention may be assembled as follows:— the holding plate 113, on which the pulleys 107, 108 and 109 are mounted, is directly mounted on the bottom plate 114. Thereafter, the drive shaft 92 is passed through the insertion hole 131 (for example, after insertion of gear 103). The rotating shaft 91 carrying the rollers 115, 116, 117 is arranged in parallel to the drive shaft 92 (with which it is engaged through the gears 104 and 105) and the drive shaft 92 and rotating shaft 91 are mounted on the holding plates 111 and 112 in such a manner that these shafts are supported so as to be freely rotatable. In addition, holding plates 111 and 112 are mounted on opposite ends of bottom plate 114, and the motor 100 is also installed. Thereafter, the holding plates 10 and 12 are installed in the slots 129 between the bottom plate 114 and holding plates 111, 112, and the belt 93 is bridged over the pulleys 106, 107, 108 and 109, and the timing belt 119 is bridged over the gears 102 and 103. Thereby the page selection mechanism can be assembled as shown in Figure 10.

An item input device embodying the present invention can be attained by installing such a page selection mechanism into a cabinet as shown in Figure 2.

Page selection operations of an item input device embodying the present invention as described above, will be explained with reference to Figure 10 and Figures 15 to 19.

A take-up operation, for taking a page sheet unit 14 into the device, is effected as explained below.

A desired page sheet unit 14 is first inserted into the guide path 13 extending from the exchange mouth, as shown in Figure 2, and it is set in a take-up ready condition by allowing the linkage pin 142 of base sheet 141 and the rotating shaft 91 to come into contact with one another.

When a selected push button switch 5 of the page selection key group A of the keyboard 7, corresponding to a desired selected page sheet 140, is depressed for switching, as shown in Figure 1, the motor 100 is automatically driven causing the gear 102 to rotate. Rotating force is transmitted to the gear 103 via the timing belt 119. As a result, the drive shaft 92 rotates through a specified angle in the direction indicated by arrow $a$ in Figure 10. When the drive shaft 92 rotates in the direction of arrow $a$, the one-way clutch 98 rotates in mesh (it is only in mesh when shaft 92 rotates in direction $a$) and therefore the rotating shaft 91 is rotated through a specified angle in the winding direction indicated by arrow $b$, through the gears 104 and 105.

Since the one-way clutch 99 is so set that it rotates freely (not in mesh) for rotation of shaft 92 in direction $a$, the belt 93 does not rotate.

When the rotating shaft 91 rotates in the direction $b$, the page sheet unit 14 shown in Figure 2 is taken up by the rotating shaft 91 as shown in Figure 15, with the linkage pin 142 linked into grooves 134, and the page sheet unit held by the belt 93. Upon completion of rotation of the rotating shaft 91 through a specified angle in the direction $b$, as shown in Figure 16, a desired page sheet 140 is set in a condition such that the end thereof not fixed to base sheet 141 is engaged with guide plate 11.

Then, the motor 100 is automatically driven in the reverse direction, and when the drive shaft 92 rotates in the direction indicated by arrow $c$, as shown in Figure 17, the one-way clutch 99 rotates in mesh, causing the pulley 106 to rotate in the direction indicated by arrow $d$. Thereby, the belt 93 rotates in the direction indicated by arrows $e$ and $f$, and the rotating shaft 91 also rotates in the reverse direction indicated by arrow $g$. As a result, the desired page sheet 140 moves in the direction indicated by arrow $m$ whilst the other page sheets 140''' move in the direction indicated by arrow mark $n$. Here, the one-way clutch 98 is set so that it rotates freely for rotation of the drive shaft 92 in the direction $c$. As a result rotating force is not transmitted by the gears 104 and 105. When the rotating shaft 91 has rotated through a specified angle in the direction $g$, the desired page sheet 140 is guided onto guide plate 74 above the switching parts of the push button switches 5 of the input key group B of keyboard 7, to provide a display of functional designations in relation to the push button switches 5, whilst undesired page sheets 140''' are accommodated in the guide path 13. Page selecting operation is thus completed.

When another push button 5 of page selection key group A of keyboard 7 is depressed, when the device is in the condition shown in Figure 17, then, as explained above, the rotating shaft 91 rotates automatically through a specified angle by action of the gears 104 and 105 as illustrated in Figure 15, to take up the previously desired page sheet 140 from the guide plate 74, and thereafter the newly desired page sheet is set in position as shown in Figure 16. The rotating shaft 91 then rotates in the reverse direction by means of the belt 93, through a specified angle, and the newly desired page sheet 140 is placed in the selection position as shown in Figure 17.

Operations for exchanging the page sheet unit 14 carried by the rotating shaft 91 will now be explained.

When it is required to exchange the page sheet unit 14, when the device is in the condition shown in Figure 17, it is required first to effect switching operation of a push button switch 5 of the page selection key group A for indicating page sheet unit exchange. As explained above, the rotating shaft 91 automatically rotates for a specified angle in the direction in which unit 14 is wound on shaft 91, as shown in Figure 15, and the page sheet unit is set in the condition shown in Figure 18, after the sheet previously on plate 74 has been taken up.

Figure 18 shows a condition in which the end of a first page sheet 140' (the end not fixed to base sheet 141) has moved past the guide plate 11 and is located in the guide path 13, and in which the end (the end not fixed to base sheet 141) of the last page sheet 140'' is engaged behind the shaft 94.

As explained with reference to Figure 5, this condition is obtained in the page sheet unit 14 by virtue of the fact that the page sheet unit is set up in such a way, at the time of take-up, that the first page sheet 140' and the last page 140'' are arranged as if a sheet had been removed from between them (that is, the length $b$ mentioned above is equal to $2a$).

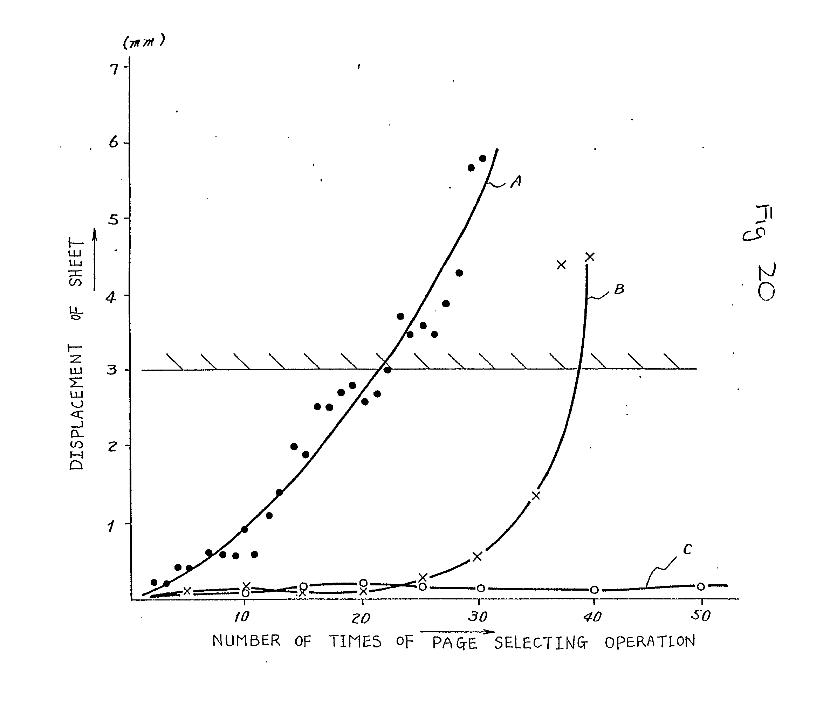

When the rotating shaft 91 is driven by the belt 93 as shown in Figure 19, in the reverse direction, as in the case of Figure 17, and rotates for a specified angle from the position in Figure 18 the linkage pin 142 is released from engagement with the grooves 134, the page sheet unit 14 is exhausted or fed out into the guide path 13, and the take-up condition shown in Figure 2 is reestablished. In this condition, one end of the page sheet unit 14 is guided or projected beyond the exchange mouth 4, to allow an operator to withdraw the unit 14.

In the above page selection mechanism, when taking up the page sheet unit 14, that is, when the page sheet unit 14 is taken up onto the rotating shaft 91 from the position shown in Figure 2 to the position shown in Figure 15, and whilst the page sheet unit 14 rotates from the take-up condition shown in Figure 15 to the condition shown in Figure 16, the rotating shaft 91 rotates in the winding direction (the direction in which the unit 14 is wound on shaft 91) through action of the drive shaft 92 — the belt 93 does not rotate because the one-way clutch 99 is free wheeling. Therefore, during such take-up, the page sheet unit 14 is taken-up by the rotating shaft 91 with its inner surface bearing on that shaft, whilst suffering a braking force exerted on its outer surfaces by the belt 93, so that no slack develops in the unit 14. On the other hand, when deploying the page sheet unit 14, that is, when page selection is effected with a desired page sheet 140 guided from the position shown in Figure 16 to the position shown in Figure 17, and at the time of feeding out or exhausting the page sheet unit 14 from the position shown in Figure 18 to the position shown in Figure 19, the rotating shaft 91 is rotated in the reverse direction, by the belt 93 acting through the page sheet unit 14. Therefore, at the time of such operations, the page sheet unit 14 (or a page sheet thereof) is fed out whilst the unit 14 is being pulled in the reverse direction around its circumference by the belt 93, and as a result the page sheet unit 14 is fed out smoothly without any slack developing.

A pulling force exerted by the belt 93 generated at the time of page sheet feedout, is obtained when the belt 93 rotates faster than the rotating shaft 91. With reference to drive shaft 92, such a pulling force can be obtained by setting the ratio of gear teeth between the gears 104 and 105 (the gear ratio) larger than the ratio of diameters of the pulley 106 and roller 117 (the pulley ratio).

The gear ratio is always constant, but the pulley ratio changes as the effective diameter of roller 117 changes in dependence upon the amount of page sheet unit 14 taken up onto that roller. Therefore, the relationship between the pulley ratio and gear ratio is set so that the ratio between the two is almost 1:1 or so that the pulley ratio becomes a little larger than the gear ratio when the page sheet unit 14 is completely taken up onto the rotating shaft 91 (the roller 117 is at its thickest) and simultaneously the gear ratio becomes progressively larger than the pulley ratio as the diameter of the roller 117 gradually becomes smaller as a page sheet is fed out, from the timing where send of page sheet unit 14 is performed only for a while. For this reason, at the time of feeding out of a page sheet, the speed of rotation of belt 93 is almost equal to that of the rotating shaft, or the speed of rotation of shaft 91 is a little faster, but as page feed out proceeds the speed of rotation of the belt becomes faster than that of the rotating shaft 91. As mentioned above, on the other hand, the speed of rotation of rotating shaft 91 is determined by the gear ratio of the gears 104 and 105 and is always constant.

As a result, the rotating shaft 91 rotates in the reverse direction while suffering a braking force from the gears 104 and 105 for the reverse direction rotating force transmitted to the circumference of the page sheet unit 14 from the belt 93, and a difference of rotation speeds between the belt 93 and rotating shaft 91 is absorbed by slipping rotation of the belt 93 on the page sheet unit 14 which is taken up.

At the time of feedout of a page sheet, or of the page sheet unit, therefore, the page sheet or the page sheet unit is fed out whilst it is being pulled by the rotating force of belt 93 applied to the rotating shaft 91 and receiving a braking force, and such pulling force operates as a tightening force on the page sheet unit 14 taken up.

As explained previously, a part of the rotating force of the belt 93 is converted into a tightening force for the page sheet unit 14 at the time of feeding out of a page sheet, due to the relationship between the pulley ratio and gear ratio, and so no slack is generated, and, furthermore, a self-recovery effect is manifest in the event of irregular initial take-up for example in the event of high speed rotation, sudden stopping or starting of the rotating shaft 91.

Figure 20 is a graph which illustrates the relationship between the number of page selecting operations effected and the displacement of ends of page sheets. In the graph of Figure 20, a comparison is made between a preferred page selection mechanism embodying the present invention and other page selection mechanisms, on the basis of experimental results.

In the graph of Figure 20, the number of page selection operations effected is indicated along the horizontal axis, whilst the displacement (mm) of the end of a page sheet is indicated along the vertical axis. In the graph of Figure 20 curves A and B indicate characteristics of devices not preferred in accordance with the present invention, whilst the curve C indicates the characteristic of a preferred device embodying the present invention.

The device whose characteristic is indicated by curve A has a structure in which page selection is effected by rotating a rotating shaft corresponding to shaft 91, in the winding direction and the reverse direction, by means only of a belt corresponding to belt 93. The device whose characteristics are indicated in curve B has a structure in which a rotating shaft corresponding to shaft 91 is directly connected to a motor corresponding to motor 100, and the rotating shaft is rotated in the winding direction and the reverse direction, for page selection, thereby. The device embodying the present invention, whose characteristics are indicated by curve C, employs a page selection mechanism as explained above. Namely, at the time of page winding, the rotating shaft 91 rotates in the winding direction, but at the time of page selection, the rotating shaft is rotated in the reverse direction by means of belt 93.

Experiments were carried out under the same conditions with regard to number of revolutions of driving of a motor, and rotation direction change-over timing, for each device.

The displacement of a page sheet end is indicated on the vertical axis in Figure 20 (in millimeters) with reference to the normal displacement of the page sheet end at the time of taking up of the page sheets into the device.

As will be clear from the experimental results illustrated by the curve C, substantially no unwanted displacement is generated in the preferred device embodying the present invention, even when a large number of selecting operations are carried out, and thereby reliable page selection can be achieved.

In the devices whose characteristics are indicated by curves A and B, it will be seen that some slackness occurs during page sheet winding or selection, and the displacement of page sheet ends gradually increases as the number of selecting operations effected increases.

For example, such displacement becomes as much as 3 mm after only 20 or 40 selection operations.

In the case of a roll type selection device, a displacement greater than 3 mm results in unstable page selection operations and frequent misselection.

Moreover, as illustrated in Figure 10, the belt 93 which is used to hold the page sheet unit 14 in place when it is taken up, is provided substantially at the centre of rotating shaft 91 in the page selection mechanism of the present invention. Thereby, as illustrated in Figure 16, a page sheet next to a desired page sheet 140 is held in place at one point by the pulley 107, and this page sheet can be reliably held thereby, ensuring stable page selection operations.

In the page selection mechanism of an embodiment of the present invention, two closed rotating force transmission paths are formed, using only one motor, and therefore the device can be provided in a compact and economic form with a reduced power consumption.

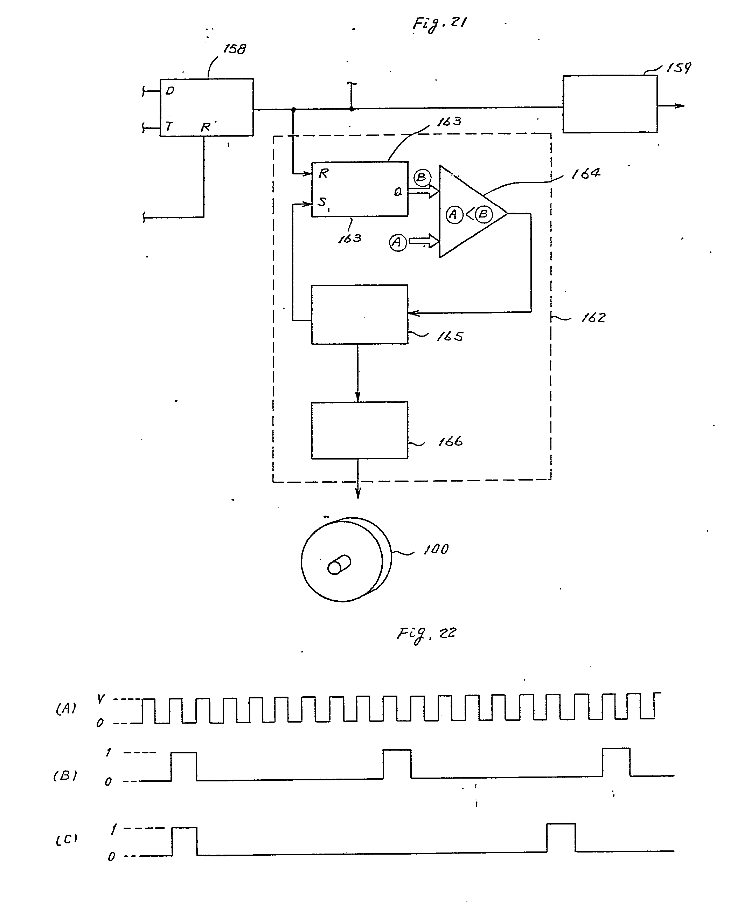

Drive control of the page selection mechanism of an embodiment of the present invention will now be explained with reference to Figures 21 and 22.

Figure 21 is a schematic block diagram of a drive control circuit of an embodiment of the present invention, and in Figure 22 waveforms A to C illustrate relationships between drive pulses and page pulses.

The drive control circuit 162 comprises a counter 163, a digital comparator 164, a drive pulse generator 165, and a motor drive circuit 166 for the motor 100.

The drive pulse generator 165 generates voltage pulses with a constant period, as shown in waveform A of Figure 22, and applies these pulses to the motor drive circuit 166 and to counter 163. The motor drive circuit 166 drives the motor 100 in accordance with the drive pulses of waveform A of Figure 22. The motor, being a pulse motor as explained above, provides a constant angle of rotation of the motor shaft for each drive pulse. Further, the total angle of rotation is proportional to the number of drive pulses. Also as explained above, the motor shaft of motor 100 is coupled to the rotating shaft 91 via the belt 119, drive shaft 92, belt 93 and gears 104 and 105, and the angle of rotation of the rotating shaft 91 is thus proportional to the number of drive pulses sent to the motor drive circuit 166. This means that the number of drive pulses required between page pulses output from flip-flop 158 (see waveform C of Figure 9) is constant in normal operation. In other words, the pulse train waveform B of Figure 22 is an enlarged version of the period between output pulses of flip-flop circuit 158 as shown in waveform C of Figure 9. The number of drive pulses between page pulses is always the same when the rotating shaft 91 is operating normally.

However, if an overload is applied to a page sheet 140, during page selection operation, an overload is consequently applied to the shaft of motor 100 via the rotating shaft 91 and belt 93 etc. As a result, as shown in waveform C of Figure 22, the number of drive pulses between page pulses changes, and synchronisation between drive pulses and motor rotation is lost. Thus, the number of drive pulses required for obtaining the same rotation is increased as compared with normal synchronous rotation as shown in waveform B of Figure 22. Such an overload may cause breakdown of a page sheet 140 or a fault in motor 100. Thus, the drive control circuit of Figure 22 has a structure in which drive pulses of the drive pulse generator 165 are input to a set terminal S of the counter circuit 163 and simultaneously the output pulses of flip-flop 158 are input to a reset terminal R of the counter 163, and a count value B sent from output terminal Q of counter 163 and a specified value A are compared by the digital comparator 164. When A is smaller than B, the digital comparator 164 outputs a stop pulse to the drive pulse generator circuit 165 in order to stop its operation.

The counter 163 is reset by output pulses (see waveforms B and C of Figure 2) of the flip-flop circuit 158 and sequentially counts succeeding drive pulses.

Content B of the counter 163 is repeatedly compared with the specified value A, which is the preset number of drive pulses normally required between page pulses, by the digital comparator 164. When the counter value B exceeds the specified value A $(A < B)$, the drive pulse generator 165 stops, causing the motor 100 to cease operation.

The motor control means explained above is capable of preventing breakdown of a page sheet when an overload is applied to a page sheet for some reason, and is of considerable practical value.

**Claims**

1. An input device, for a data processing system, having an operational disposition in which a plurality of flexible page sheets (140, 140', 140''), bearing input information designations, bound together in a page sheet unit (14) separate from a rotatable shaft (91, 115, 116, 117) of the device, are wound around the circumference of the rotatable shaft (91, 115, 116, 117) in such a manner that the sheets overlap one another around the circumference with their radially outermost ends spaced apart (a, b) around the circumference, the device being operable to select a desired page sheet (140, 140', 140'') by rotation of the rotatable shaft (91, 115, 116, 117) in the direction of winding of the page sheets (140, 140', 140'') in the said operational disposition, and to deploy a selected page sheet, to a display location, by rotation of the shaft (91, 115, 116, 117) in the opposite direction,

characterised in that the end of the page sheets (140, 140', 140'') of the page sheet unit (14) which are radially innermost in the said operational disposition are fixed to a surface of a flexible base sheet (141) of the page sheet unit (14) and are bound in the page sheet unit (14) so as to be spaced apart around the said circumference, in the said operational disposition, the flexible base sheet (141) having at one end a linkage pin (142) opposite ends of which project from opposite sides of the base sheet (141) and the rotatable shaft (91, 115, 116, 117) having groove means (134) into which the said opposite ends of the linkage pin (142) are linked and coupled when the page sheet unit (141) is taken up onto the rotatable shaft (91, 115, 116, 117),

in that the device has a page sheet unit exchange mouth (4), opening to the exterior of the device, and a guide path (10, 11, 12, 75) extending from the exchange mouth (4) to the rotatable shaft (91, 115, 116, 117), the page sheet unit (14) being inserted through the exchange mouth (4) into the guide path (10, 11, 12, 75), so as to link the said opposite ends of the linkage pin (142) into the groove means (134) of the rotatable shaft (91, 115, 116, 117) when it is to be taken up onto the rotatable shaft (91, 115, 116, 117), and the page sheet unit (14), being fed out of the device through the exchange mouth (4) via the guide path (10, 11, 12, 75) when it is to be released after having been previously taken-up onto the rotatable shaft (91, 115, 116, 117),

and in that the device is operable to take up the page sheet unit (14) onto the rotatable shaft (91, 115, 116, 117), to achieve the said operational disposition, by rotation of the rotatable shaft (91, 115, 116, 117) in the said direction of winding, and operable to release the taken-up page sheet unit (14) by rotation of the rotatable shaft (91, 115, 116, 117) in the said opposition direction, the device having an endless belt (93) which passes around the rotatable shaft for maintaining the wound condition of the page sheets (140, 140', 140'') of the page sheet unit (14) when taken up onto the rotatable shaft.

2. A device as claimed in claim 1, wherein the page sheet unit (14) is so dimensioned that when the page sheets (140, 140', 140") thereof are wound around the circumference of the rotatable shaft (91, 115, 116, 117) in the said manner such that the sheets overlap one another, the spacing (b) between the radially outermost end of a last page sheet (140") of the unit (14) and the radially outermost end of a first page sheet (140') of the unit (14) is about twice as great as the spacings (a) between other circumferentially consecutive radially outermost ends in such a way that for a particular rotational disposition of the rotatable shaft (91, 115, 116, 117), corresponding to the spacing between the radially outermost ends of the first (140') and last (140") page sheets, page selection operations are disabled, and wherein, when the previously taken-up page sheet unit (14) is to be released the device is operable to rotate the rotatable shaft (91, 115, 116, 117), in the said winding direction, to the said particular rotational disposition, then to rotate the rotatable shaft (91, 115, 116, 117) in the said opposite direction to release the previously taken-up page sheet unit (14).

3. A device as claimed in claim 1 or 2, characterised in that the endless belt (93) passes around the rotatable shaft substantially centrally of the shaft and is coupled to a rotation drive source (92, 98, 99, 100) and in that when the rotatable shaft is caused to rotate in the said opposite direction the rotational force causing the rotation is applied by the endless belt (93).

4. A device as claimed in claim 3, wherein, when the rotatable shaft (91, 115, 116, 117) is caused to rotate in the said opposite direction, by rotational force applied by the endless belt (93), the rotatable shaft is caused to rotate at a higher speed than it is caused to rotate in the said direction of winding when a desired page sheet is being selected.

5. A device as claimed in claim 3 or 4, wherein the rotation drive source comprises a drive shaft (92), coupled to a motor (100), arranged in parallel to the rotatable shaft (91), and first (98) and second (99) one-way clutches arranged on the drive shaft (92), at one end of the drive shaft (92) and intermediately along the length of the drive shaft (92) respectively, each of the one-way clutches (98, 99) being operable to rotate in mesh with the drive shaft (92) for one direction of rotation of the drive shaft (92), the clutches (98, 99) meshing for respective opposite directions of rotation of the drive shaft (92), wherein the said one end of the drive shaft (92) is connected to the said rotatable shaft (91) by way of gears (104, 105) and the first one-way clutch (98), and an intermediate part of the drive shaft (92) is connected to the said rotatable shaft (91) by way of the endless belt (93) and the second one-way clutch (99), and wherein, for rotation in the said direction of winding, rotating force is transmitted to the rotatable shaft (91) through the gears (104, 105) and the first one-way clutch (98), and, for rotation in the said opposite direction, rotating force is transmitted to the rotatable shaft (91) through the endless belt (93) and the second one-way clutch (99).

6. A device as claimed in claim 5, when read as appendant to claim 4, wherein the endless belt (93) passes around the second one-way clutch (99) and around a pulley (107) provided on the rotatable shaft (91), the pulley ratio effective for the endless belt (93) between the second one-way clutch (99) on the drive shaft (92) and the rotatable shaft (91) being smaller than the gear ratio effective between the first one-way clutch (98) on the drive shaft (92) and the rotatable shaft (91), so that the rotatable shaft (91) is caused to rotate at a higher speed in the said opposite direction than in the said direction of winding.

7. A device as claimed in claim 1, wherein the base sheet (141) of the page sheet unit (14) is provided at one end thereof with holes (144, 144a, 145, 145a) through which light can pass, and wherein means (152) are provided for directing light to pass through those holes, when the page sheet unit (14) is wound on the rotatable shaft (91, 115, 116, 117), and means (154) are provided for detecting light passed through those holes (144, 144a, 145, 145a) for obtaining page sheet identification signals.

8. A device as claimed in claim 1, wherein the base sheet (141) of the page sheet unit (14) is provided at one edge thereof with holes (143) through which light can pass, and wherein means (152) are provided for directing light to pass through those holes (143), when the page sheet unit (14) is wound on the rotatable shaft (91, 115, 116, 117), and means (154) are provided for detecting light passed through those holes (143) for obtaining a page sheet unit identification signal.

9. A device as claimed in claim 1, having a roller (115) on the rotatable shaft (91), which roller (115) is provided with holes (136, 137, 138) through which light can pass, and wherein means (152) are provided for directing light to pass through those holes, and means (154) are provided for detecting light passed through those holes for obtaining a page sheet unit identification signal.

10. A device as claimed in any preceding claim, comprising a keyboard (7) having a plurality of keys (5), and wherein, when one of the page sheets (140, 140', 140") is in a display location, this page sheet (140, 140', 140") provides respective designations of functions of the respective keys (5) of the keyboard (7).

**Patentansprüche**

1. Eingabeeinrichtung für eine Datenverarbeitungsanlage, mit einer Betriebsart, bei welcher eine Vielzahl flexibler Blätter (140, 140', 140"), die Informationskennzeichnungen enthalten und in einer Blatteinheit (14), separat von einer rotierbaren Welle (91, 115, 116, 117) der Einrichtung zusammengebunden sind, so um den Umfang der rotierbaren Welle (91, 115, 116, 117) gewunden sind, daß die Blätter einander längs dem Umfang überlappen, wobei ihre radial äußersten Enden längs dem Umfang mit einem Abstand (a, b) voneinander angeordnet sind, welche Einrichtung in der genannten Betriebsart zur Auswahl eines gewünschten Blattes (140, 140', 140") betätigt werden kann, indem die rotierbare Welle (91, 115, 116, 117) in Richtung der Windungen der Blätter (140, 140', 140") rotiert wird, und zur Entfaltung eines gewünschten Blattes in die Anzeigeposition, indem die Welle (91, 115, 116, 117) in entgegengesetzte Richtung rotiert wird,

dadurch gekennzeichnet, daß die Enden der Blätter (140, 140', 140") der Blatteinheit (14), welche radial am weitesten innen in der genannten Betriebsart angeordnet sind, an der Oberfläche eines flexiblen Blattes (141) der Blatteinheit (14) fixiert und so in der Blatteinheit (14) gebunden sind, daß sie mit Abstand längs dem Umfang in der genannten Betriebsart angeordnet sind, wobei das flexible Basisblatt (141) an einem Ende einen Verbindungsstift (142) aufweist, dessen entgegengesetzte Enden von entgegengesetzten Seiten des Basisblattes (141) vorstehen, und die rotierbare Welle (91, 115, 116, 117) Nuteneinrichtungen (134) aufweist, in welche die genannten entgegengesetzten Enden des Verbindungsstiftes (142) verbunden und gekoppelt sind, wenn die Blatteinheit (141) auf die rotierbare Welle (91, 115, 116, 117) aufgenommen ist, und

daß die Einrichtung einen zur Auswechslung der Blatteinheit dienenden Mund (4) aufweist, der sich zum Äußeren der Einrichtung hin öffnet, und einen Führungsweg (10, 11, 12, 75) der sich von dem Auswechselmund (4) zu der rotierbaren Welle (91, 115, 116, 117) erstreckt, wobei die Blatteinheit (14) durch den Auswechselmund (4) in der Führungsweg (10, 11, 12, 75) so eingeführt wird, daß die entgegengesetzten Enden des Verbindungsstiftes (142) in die Nuteneinrichtungen (134) der rotierbaren Welle (91, 115, 116, 117) verbunden werden, wenn sie auf die rotierbare Welle (91, 115, 116, 117) aufgenommen werden soll, und die Blatteinheit (14) durch den Auswechselmund (4) längs dem Führungsweg (10, 11, 12, 75) herausgeführt wird, um freigegeben zu werden, nachdem sie zuvor auf der rotierbaren Welle (91, 115, 116, 117) aufgenommen war, und

daß die Einrichtung zur Aufnahme der Blatteinheit (14) auf die rotierbare Welle (91, 115, 116, 117) durch Rotation der rotierbaren Welle (91, 115, 116, 117) in der genannten Richtung der Windung betätigt werden kann, um die genannte Betriebsart zu erzielen, und zur Freigabe der aufgenommenen Blatteinheit (14) durch Rotation der rotierbaren Welle (91, 115, 116, 117) in entgegengesetzte Richtung betätigt werden kann, und daß die Vorrichtung ein endloses Band (93) hat, welches um die rotierbare Welle umläuft, um den gewundenen Zustand der Blätter (140, 140', 140") der Blatteinheit (14) aufrecht zu erhalten, wenn diese auf der rotierbaren Welle aufgenommen ist.

2. Einrichtung nach Anspruch 1, bei welcher die Blatteinheit (14) so dimensioniert ist, daß dann, wenn deren Blätter (140, 140', 140") um den Umfang der rotierbaren Welle (91, 115, 116, 117) so gewunden sind, daß die Blätter einander überlappen, der Abstand (b) zwischen den radial äußersten Enden eines letzten Blattes (140") der Einheit (14) und dem radial äußersten Ende eines ersten Blattes (140') der Einheit (14) umgefähr zweimal so groß wie die Abstände (a) zwischen anderen in Umfangsrichtung aufeinanderfolgenden radial äußersten Enden so ist, daß für eine besondere Rotationsart der rotierbaren Welle (91, 115, 116, 117), welche dem Abstand zwischen den radial äußersten Enden des ersten (140') und des letzten (140") Blattes entspricht, der Auswahlbetrieb des Blattes verhindert wird, und bei welcher dann, wenn die zuvor aufgenommene Blatteinheit (14) freigegeben werden soll, die Einrichtung betätigbar ist, um die rotierbare Welle (91, 115, 116, 117) in die genannte Windungsrichtung zu der genannten besonderen Rotationsdisposition zu rotieren, um dann die rotierbare Welle (91, 115, 116, 117) in die entgegengesetzte Richtung zu rotieren, um die zuvor aufgenommene Blatteinheit freizugeben.

3. Einrichtung nach Anspruch 1 oder 2, dadurch gekennzeichnet, daß das endlose Band (93) um die rotierbare Welle im wesentlichen zentral zu der Welle umläuft und mit einer Rotationsantriebsquelle (92, 98, 99, 100) verbunden ist, und daß dann, wenn die rotierbare Welle in die genannte entgegengesetzte Richtung rotiert wird, die Rotationskraft, welche die Rotation verursacht, durch das endlose Band (93) übertragen wird.

4. Einrichtung nach Anspruch 3, bei welcher dann, wenn die rotierbare Welle (91, 115, 116, 117) in die genannte entgegengesetzte Richtung rotiert wird, durch die von dem Endlosband (93) übertragene Rotationskraft, die rotierbare Welle mit einer höheren Geschwindigkeit rotiert wird, als dann, wenn sie in die genannte Richtung der Windung rotiert wird, wenn ein gewünschtes Blatt ausgewählt wird.

5. Einrichtung nach Anspruch 3 oder 4, bei welcher die Rotationsantriebsquelle eine Antriebswelle (92) umfaßt, welche mit einem Motor (100) gekoppelt ist, der parallel zu der rotierbaren Welle (91) angeordnet ist, und erste (98) und zweite (99) Einwegkupplungen an einem Ende der Antriebswelle (92) bzw. an Zwischenbereichen längs der Länge der Antriebswelle (92) angeordnet sind, und jede der Einwegkupplungen (98, 99) betätigt werden kann, um im Eingriff mit der Antriebswelle (92) in eine Rotationsrichtung der Antriebswelle (92) zu rotieren, wobei die Kupplungen (98, 99) für jeweils entgegengesetzte Rotationsrichtungen der Antriebswelle (92) einzugreifen, wobei das genannte eine Ende der Antriebswelle (92) mit der genannten rotierbaren Welle (91) über Zahnräder (104, 105) und die genannte erste Einwegkupplung (98) verbunden ist, und ein Zwischenabschnitt der Antriebswelle (92) mit der genannten rotierbaren Welle (91) über das Endlosband (93) und die zweite Einwegkupplung (99) verbunden ist, und bei welcher zur Rotation in der genannten Windungsrichtung die Rotationskraft auf die rotierbare Welle (91) über die Zahnräder (104, 105) und die erste Einwegkupplung (98) übertragen wird, und zur Rotation in die genannte entgegengesetzte Richtung die Rotationskraft über das Endlosband (93) und die zweite Einwegkupplung (99) zu der rotierbaren Welle (91) übertragen wird.

6. Einrichtung nach Anspruch 5 in Verbindung mit Anspruch 4, bei welcher das Endlosband (93) um die zweite Einwegkupplung (99) und um eine Riemenscheibe (107) läuft, welche auf der rotierbaren Welle (91) vorgesehen ist, wobei das Antriebsverhältnis, welches für das Endlosband (93) zwischen der zweiten Einwegkupplung (99) auf der Antriebswelle (91) und der rotierbaren Welle (91) wirksam ist, kleiner als das Übersetzungsverhältnis ist, welches zwischen der ersten Einwegkupplung (98) auf der Antriebswelle (92) und der rotierbaren Welle (91) wirksäm ist, so daß die rotierbare Welle (91) mit einer höheren Geschwindigkeit in der genannten entgegengesetzten Richtung als in der genannten Windungsrichtung rotiert wird.

7. Einrichtung nach Anspruch 1, bei welcher das Basisblatt (141) der Blatteinheit (14) an einer Kante derselben Löcher (144, 144a, 145, 145a) aufweist, durch welche Licht hindurchtreten kann, und bei welcher Einrichtungen (152) zur Ausrichtung des Lichtes vorgesehen sind, damit dieses durch diese Löcher hindurchtritt, wenn die Blatteinheit (14) um die rotierbare Welle (91, 115, 116, 117) gewunden ist, und bei welcher Einrichtungen (154) vorgesehen sind, um durch die Löcher (144, 144a, 145, 145a) hindurchgetretenes Licht zu detektieren, um ein Signal zur Identifizierung des Blattes zu erhalten.

8. Einrichtung nach Anspruch 1, bei welcher das Blatt (141) der Blatteinheit (14) an ihrer einen Kante Löcher (143) aufweist, durch welche Licht hindurchtreten kann, und bei welcher Einrichtungen (152) zur Ausrichtung des Lichtes vorgesehen sind, damit dieses durch die Löcher (143) hindurchtritt, wenn die Blatteinheit (14) um die rotierbare Welle (91, 115, 116, 117) gewunden ist, und bei welcher Einrichtungen (154) vorgesehen sind, welche das durch diese Löcher (143) hindurchgetretene Licht detektieren, um ein Identifizierungssignal einer Blatteinheit zu erhalten.

9. Einrichtung nach Anspruch 1 mit einer auf der rotierbaren Welle (91) vorgesehenen Rolle (115) welche Löcher (136, 137, 138) aufweist, durch die Licht hindurchtreten kann, und bei welcher Einrichtungen (152) zur Ausrichtung des Lichtes vorgesehen sind, damit dieses durch diese Löcher hindurchtritt und Einrichtungen (154), welche durch diese Löcher hindurchgetretenes Licht detektieren, um ein Identifizierungssignal der Blatteinheit zu erhalten.

10. Einrichtung nach einem der vorhergehenden Ansprüche, mit einer Tastatur (7), welche eine Vielzahl von Tasten (5) aufweist, und bei welcher dann, wenn eines der Blätter (140, 140′, 140″) in der Anzeigeposition ist, dieses Blatt (140, 140′, 140″) entsprechende Kennzeichnungen von Funktionen der jeweiligen Tasten (5) der Tastatur (7) liefert.

**Revendications**

1. Dispositif d'entrée, pour système de traitement de données, possédant une disposition de fonctionnement suivant laquelle plusieurs feuillets de pages souples (140, 140′, 140″), portant des désignations d'informations d'entrée, qui sont liés ensemble en une unité (14) de feuillets de pages distincte d'un arbre rotatif (91, 115, 116, 117) du dispositif, sont enroulés sur la circonférence de l'arbre rotatif (91, 115, 116, 117) de telle manière que les feuillets se chevauchent l'un l'autre autour de la périphérie en laissant, entre leurs extrémités radialement le plus à l'extérieur, un certain écartement mutuel (a, b) suivant la circonférence, le dispositif ayant pour fonction de sélectionner un feuillet de page voulu (140, 140′, 140″) par rotation de l'arbre rotatif (91, 115, 116, 117) dans le sens d'enroulement des feuillets de pages (140, 140′, 140″) dans ladite disposition de fonctionnement, et de déployer un feuillet de page choisi, jusqu'à un emplacement de visualisation, par rotation de l'arbre (91, 115, 116, 117) dans le sens opposé,

caractérisé en ce que les extrémités des feuillets de pages (140, 140′, 140″) de l'unité (14) de feuillets de pages qui sont disposées radialement le plus à l'intérieur dans ladite disposition de fonctionnement sont fixées à la surface d'un feuillet de base souple (141) de l'unité (14) de feuillets de pages et sont liées à l'unité (14) de feuillets de pages de manière à présenter entre elles un certain écartement mutuel autour de ladite circonférence, dans ladite disposition de fonctionnement, le feuillet de base souple (141) possédant à l'une des ses extrémités une tige de liaison (142) dont les extrémités opposées font saillie des côtés opposés du feuillet de base (141) et l'arbre rotatif (91, 115, 116, 117) possédant des rainures (134) dans lesquelles lesdites extrémités opposées de la tige de liaison (142) sont insérées en position de couplage lorsque l'unité (14) de feuillets de pages est enroulée sur l'arbre rotatif (91, 115, 116, 117),

en ce que le dispositif possède un guichet (4) d'échange d'unité de feuillets de pages, ouvrant sur l'extérieur du dispositif, et un trajet de guidage (10, 11, 12, 75) s'étendant du guichet d'échange (4) jusqu'à l'arbre rotatif (91, 115, 116, 117), l'unité (14) de feuillets de pages étant insérée par le guichet d'échange (4) dans le trajet de guidage (10, 11, 12, 75) de manière que les extrémités opposées de la tige de liaison (142) soient insérées en position de couplage dans les rainures (134) de l'arbre rotatif (91, 115, 116, 117) lorsque le feuillet doit être enroulé sur l'arbre rotatif (91, 115, 116, 117), et l'unité (14) de feuillets de pages étant délivrée hors du dispositif par le guichet d'échange (4) via le trajet de guidage (10, 11, 12, 75) lorsqu'elle doit être rejetée après avoir été préalablement enroulée sur l'arbre rotatif (91, 115, 116, 117),

et en ce que le dispositif a pour fonction d'enrouler l'unité (14) de feuillets de pages sur l'arbre rotatif (91, 115, 116, 117) afin d'obtenir ladite disposition de fonctionnement par rotation de l'arbre rotatif (91, 115, 116, 117) dans ledit sens d'enroulement, et ayant pour fonction de libérer l'unité (14) de feuillets de pages enroulée par rotation de l'arbre rotatif (91, 115, 116, 117) dans ledit sens opposé, le dispositif possédant une courroie sans fin (93) qui passe autour de l'arbre rotatif afin de maintenir l'état enroulé des feuillets de pages (140, 140', 140") de l'unité de feuillets de pages (14) lorsqu'il est enroulé sur l'arbre rotatif.

2. Dispositif selon la revendication 1, où l'unité (14) de feuillets de pages a des dimensions telles que, lorsque ses feuillets de pages (140, 140', 140") sont enroulés sur la circonférence de l'arbre rotatif (91, 115, 116, 117) de ladite manière telle que les feuilles se chevauchent mutuellement, l'écartement (b) entre l'extrémité située radialement le plus à l'extérieur d'un dernier feuillet de page (140") de l'unité (14) et l'extrémité située radialement le plus à l'extérieur d'un premier feuillet de page (140') de l'unité (14) vaut environ deux fois l'écartement (a) existant entre les autres extrémités, circonférentiellement consécutives, qui sont situées radialement le plus à l'extérieur, si bien que, pour une disposition particulière de l'arbre rotatif, correspondant à l'écartement entre les extrémités situées le plus à l'extérieur du premier feuillet de page (140') et du dernier feuillet de page (140"), les opérations de sélection de page ne sont pas autorisées, et où, lorsque l'unité de feuillets de pages préalablement enroulée doit être libérée, le dispositif a pour fonction de faire tourner l'arbre rotatif dans ledit sens d'enroulement jusqu'a à ladite disposition particulière, puis de faire tourner l'arbre rotatif dans ledit sens opposé de manière à libérer l'unité (14) de feuillets de pages préalablement enroulée.

3. Dispositif selon la revendication 1 ou 2, caractérisé en ce que la courroie sans fin (93) passe autour de l'arbre rotatif sensiblement au centre d'larbre et est couplée à une source d'entraînement en rotation (92, 98, 99, 100) et en ce que, lorsque l'arbre rotatif est amené à tourner dans ledit sens opposé, la force de rotation produisant la rotation est appliquée à la courroie sans fin (93).

4. Dispositif selon la revendication 3, où, lorsque l'arbre de rotation (91, 115, 116, 117) est amené à tourner dans ledit sens opposé par l'action de la force de rotation appliquée par la courroie sans fin (93), l'arbre rotatif est amené à tourner à une vitesse plus élevée que celle à laquelle il est amené à tourner dans ledit sens d'enroulement lors de la sélection d'un feuillet de page voulu.

5. Dispositif selon la revendication 3 ou 4, où la source d'entraînement en rotation comprend un arbre d'entraînement (92), couplé à un moteur (100), disposé parallèlement à l'arbre rotatif (91), et un premier embrayage unidirectionnel (98) et un deuxième embrayage unidirectionnel (99) placés sur l'arbre d'entraînement (92), à une première extrémité de l'arbre d'entraînement (92) et en une situation intermédiaire de la longueur de l'arbre d'entraînement (92), chacun des embrayages unidirectionnels (98, 99) ayant pour fonction de tourner en prise avec l'arbre d'entraînement (92) pour un sens de rotation de l'arbre d'entraînement (92), les embrayages (98, 99) se mettant en prise pour des sens respectivement opposés de rotation de l'arbre d'entraînement (92), où ladite première extrémité de l'arbre d'entraînement (92) est reliée audit arbre rotatif (91) par l'intermédiaire de pignons (104, 105) et du premier embrayage unidirectionnel (98), et une partie intermédiaire de l'arbre d'entraînement (92) est reliée audit arbre rotatif (91) par l'intermédiaire de la courroie sans fin (93) et du deuxième embrayage unidirectionnel (99), et où, pour une rotation dans ledit sens d'enroulement, la force de rotation est transmise à l'arbre rotatif (91) par l'intermédiaire des pignons (104, 105) et du premier embrayage unidirectionnel (98) et, pour une rotation dans ledit sens opposé, la force de rotation est transmise à l'arbre rotatif (91) par l'intermédiaire de la courroie sans fin (93) et du deuxième embrayage unidirectionnel (99).

6. Dispositif selon la revendication 5, dépendant de la revendication 4, où la courroie sans fin (93) passe sur le deuxième embrayage unidirectionnel (99) et sur une poulie (107) disposée sur l'arbre rotatif (91), le rapport de transmission par poulies valable pour la courroie sans fin (93) entre le deuxième embrayage unidirectionnel (99) se trouvant sur l'arbre d'entraînement (92) et l'arbre rotatif (91) étant plus petit que le rapport d'engrenage valable entre le premier embrayage unidirectionnel (98) se trouvant sur l'arbre d'entraînement (92) et l'arbre rotatif (91), si bien que l'arbre rotatif est amené à tourner à une vitesse plus élevée dans ledit sens opposé que dans ledit sens d'enroulement.

7. Dispositif selon la revendication 1, où le feuillet de base (141) de l'unité (14) de feuillets de pages est doté, sur l'un ses bords, de trous (144, 144a, 145, 145a) par lesquels de la lumière peut passer, et où des moyens (152) sont prévus pour diriger de la lumière de façon qu'elle passe par ces trous lorsque l'unité (14) de feuillets de pages est enroulée sur l'arbre rotatif (91, 115, 116, 117), et des moyens (154) sont prévus pour détecter la lumière qui est passée par ces trous (144, 144a, 145, 145a) de façon que puissent être obtenus des signaux d'identification de feuillet de page.

8. Dispositif selon la revendication 1, où le feuillet de base (141) de l'unité (14) de feuillets de pages est doté, sur l'un de ses bords, de trous (143) par lesquels de la lumière peut passer, et où des moyens (152) sont prévus pour diriger de la lumière de façon qu'elle passe par ces trous (143) lorsque l'unité (14) de feuillets de pages est enroulée sur l'arbre rotatif (91, 115, 116, 117), et des moyens (154) sont prévus pour détecter la lumière qui est passée par ces trous (143) de façon que puisse être obtenu un signal d'identification d'unité de feuillets de pages.

9. Dispositif selon la revendication 1, possédant un cylindre (115) disposé sur l'arbre rotatif (91), lequel cylindre (115) est doté de trous (136, 137, 138) par lesquels de la lumière peut passer, et où des moyens (152) sont prévus pour diriger de la lumière de façon qu'elle passe par ces trous, et des moyens (154) sont prévus pour détecter la lumière qui a passé par ces trous, de façon que puisse être obtenu un signal d'identification d'unité de feuillets de pages.

10. Dispositif selon l'une quelconque des revendications précédentes, comprenant un clavier (7) possédant plusieurs touches (5), et où, lorsque l'un des feuillets de pages (140, 140', 140") se trouve en un emplacement de visualisation, ce feuillet de page (140, 140', 140") fournit des désignations respectives de fonctions des touches respectives (5) du clavier (7).

Fig. 1

0 047 606

Fig. 2

Fig. 3

144 145
143

142

14

141

140

0 047 606

Fig. 4

Fig. 5

Fig. 6

Fig. 7

Fig. 8

Fig. 9

Fig. 10

0 047 606

Fig-11

0 047 606

Fig. 12

Fig. 14

Fig. 13

Fig. 15

Fig. 16

Fig. 17

Fig . 18

Fig . 19

14

Fig 20

Fig. 21

Fig. 22